# EUROPÄISCHE PATENTSCHRIFT

(11) **EP 1 348 612 B1**
(45) Veröffentlichungstag und Bekanntmachung des Hinweises auf die Patenterteilung: **31.05.2006**
(21) Anmeldenummer: 03000731.4
(22) Anmeldetag: 13.01.2003
(51) Int. Cl.: B62D 25/08

(54) **Frontmodulträger für Kraftfahrzeuge**
Modular front support for vehicles
Support modulaire frontal pour véhicules

(30) Priorität: 25.02.2002 DE 10207821
(43) Veröffentlichungstag der Anmeldung: 01.10.2003
(73) Patentinhaber: Hella-Behr Fahrzeugsysteme GmbH, 59552 Lippstadt (DE)
(72) Erfinder: Braun, Dieter, Dipl.-Ing., 33378 Rheda-Wiedenbrück (DE); Schmidt, Ralf, Dipl.-Ing., 59302 Oelde (DE)
(74) Vertreter: Ostermann, Thomas

(56) Entgegenhaltungen:
- EP-A- 0 658 470
- EP-A- 1 127 739
- DE-A- 19 520 870
- DE-A- 19 813 163
- US-A- 5 658 041

## Beschreibung

Die Erfindung betrifft einen Frontmodulträger für Kraftfahrzeuge nach dem Oberbegriff des Patentanspruchs 1.

Aus der DE 195 20 870 A1 ist ein Frontmodulträger für Kraftfahrzeuge bekannt, der aus einem sich quer zur Längsachse des Kraftfahrzeuges erstreckenden Querträger und Aufnahmen für frontseitige Bauteile besteht. Endseitig des Querträgers sind die Aufnahmen als schalenförmige Vertiefungen für Scheinwerfer ausgebildet, wobei die Aufnahmen mittels Spritzgieß- oder Druckgießtechnik einstückig mit dem Querträger verbunden sind.

Aus der EP 0 679 565 B1 ist ein Frontmodulträger für Kraftfahrzeuge bekannt, der einen relativ steifen Querträger aufweist und wobei an den Enden des Querträgers jeweils Aufnahmen für Scheinwerfer durch Anspritzen mit dem Querträger verbunden sind.

Aus der EP 1 127 739 A2 ist ein Frontmodulträger für Kraftfahrzeuge bekannt, der einen sich quer zur Längsachse des Kraftfahrzeugs erstreckenden Querträger und Aufnahmen für frontseitige Bauteile aufweist. Die Aufnahmen sind als Laschen ausgebildet, die an einen Öffnungsrand des Querträgers angespritzt sind und an denen ein frontseitiges Bauteil über einen Verbindungssteg befestigt ist. Der Verbindungssteg des frontseitigen Bauteils weist eine Sollbruchstelle auf, so dass in einem Kollisionsfall bei Überschreitung einer vorgegebenen Schwellwertkraft das frontseitige Bauteil von dem Querträger abreißt.

Aufgabe der vorliegenden Erfindung ist es, einen Frontmodulträger für Kraftfahrzeuge derart weiterzubilden, dass zum einen die Herstellungskosten reduziert und zum anderen die Funktionalität erweitert wird.

Zur Lösung dieser Aufgabe weist die Erfindung die Merkmale des Patenanspruchs 1 auf.

Der besondere Vorteil der Erfindung besteht darin, dass eine topfförmige Aufnahme durch die Verbindung derselben mittels eines oder mehrerer Verbindungsstege mit dem Querträger nachgiebig gegenüber dem relativ steifen Querträger ausgebildet ist. Bei Überschreitung einer vorgegebenen Schwellwertkraft reißt der bzw. reißen die verbindungsstege, so dass die topfförmige Aufnahme bzw. die topfförmigen Aufnahmen von dem Querträger getrennt werden. Hierdurch kann insbesondere der Fußgängerschutz verbessert werden, da bei einer Kollision des Fahrzeugs die ein Gehäuse eines frontseitigen Bauteils bildende Aufnahme, beispielsweise eines Scheinwerfers, nach innen verschoben wird. Darüber hinaus ermöglicht diese mechanische Nachgiebigkeit, dass bei leichten Kollisionen eine totale Zerstörung des durch Führungsmittel nach innen bewegten Bauteils vermieden wird. Es kann eine separate Reparatur dieses Bauteils vorgenommen werden, um nachfolgend dasselbe an dem Querträger bzw. der Karosserie des Kraftfahrzeugs in der vorgesehenen Position zu befestigen.

Vorteilhaft bildet der Verbindungssteg eine Sollbruchlinie, die durchgehend oder nicht durchgehend entlang eines Randes der Aufnahme verläuft. Die Sollbruchlinie kann als eine Materialverdünnung, als eine Einkerbung oder als eine Perforationslinie ausgebildet sein. Wesentlich ist, dass bei Auftreten einer mechanischen Stoßbeanspruchung gezielt eine Trennung zwischen dem Querträger und der Aufnahme an der Sollbruchlinie erfolgt. Vorteilhaft kann somit eine gezielte Relativverschiebung der Aufnahme zu dem Querträger bewirkt werden.

Erstreckt sich der Verbindungssteg nur bereichsweise entlang einer gemeinsamen Grenzlinie, kann die Empfindlichkeit gegenüber Temperaturänderungen, die sich aufgrund der unterschiedlichen thermischen Ausdehnungskoeffizienten der verwendeten Materialien ergeben, weiter reduziert werden, weil Raum für die thermische Ausdehnung entlang der Grenzlinie vorhanden ist.

Nach einer bevorzugten Ausführungsform der Erfindung wird der größte Teil der Grenzlinie durch einen Freischnitt gebildet, wobei die Aufnahme lediglich entlang eines kleinen Teils der Grenzlinie mit dem Querträger über einen oder mehrere Verbindungsstege verbunden ist.

Nach einer bevorzugten Weiterbildung der Erfindung ist die Aufnahme durch Anspritzen mit dem Querträger verbunden, so dass auf einfache Weise an einem standardisierten Querträger unterschiedliche Scheinwerfergehäuse befestigt werden können. Vorteilhaft können hierdurch herstellungstechnisch einfach unterschiedlich ausgeformte Frontmodulträger geformt werden.

Ein Ausführungsbeispiel der Erfindung wird nachfolgende anhand der Zeichnungen näher erläutert.

Es zeigen:

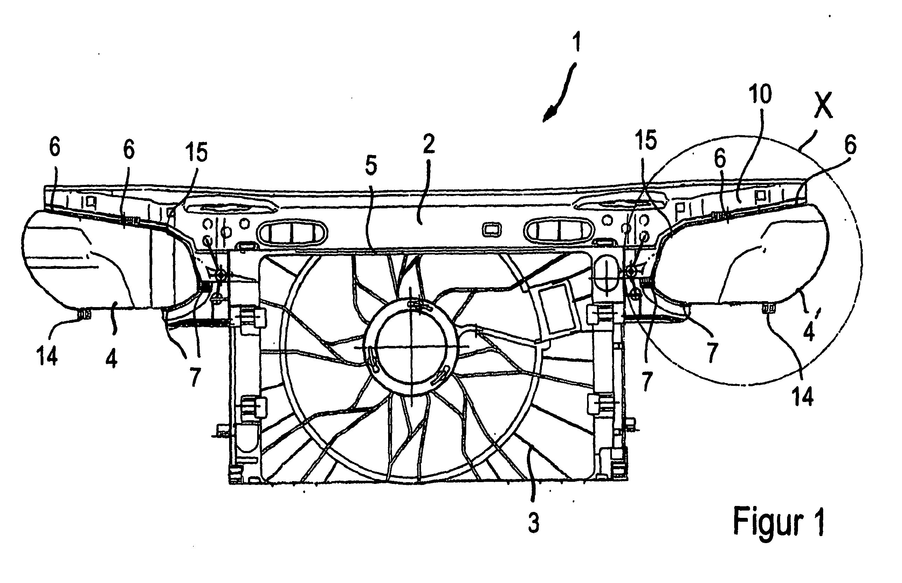

- Figur 1: eine Vorderansicht eines Frontmodulträgers,
- Figur 2: eine vergrößerte Darstellung einer über Verbindungsstege mit einem Querträger des Frontmodulträgers verbundenen Einzelheit X (Aufnahme für einen Scheinwerfer) und

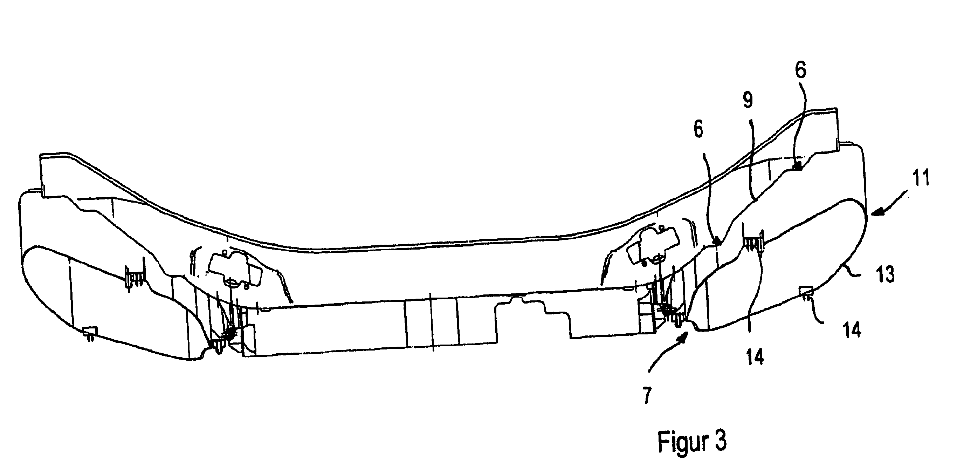

- Figur 3: eine Draufsicht auf den Frontmodulträger.

Ein Frontmodulträger 1 besteht im wesentlichen aus einem Querträger 2 und einer Mehrzahl von Aufnahmen 3, 4, 4' von frontseitigen Bauteilen.

Der Querträger 2 ist langgestreckt ausgebildet und erstreckt sich in einem oberen Bereich des Frontmodulträgers 1. Die Aufnahmen 3, 4, 4' sind an einer Unterseite des Querträgers 2 mit demselben verbunden. Der Querträger 2 ist als Profilteil aus einem metallverstärkten Kunststoffmaterial durch Spritz- oder Druckgießen hergestellt. Er erstreckt sich nach Montage in dem Kraftfahrzeug quer zur Längsachse desselben.

In einem mittleren Bereich des Frontmodulträgers 1 erstreckt sich unter Ausbildung eines durchgehenden Verbindungssteges 5 die Aufnahme 3 für einen nicht dargestellten Kühler mit einem nicht dargestellten Lüftermotor.

An gegenüberliegenden Endbereichen des Querträgers 2 sind die Aufnahmen 4, 4' für Scheinwerfer über jeweils zwei Verbindungsstege 6 mit einer Unterseite des Querträgers 2 verbunden. Zusätzlich sind die Aufnahmen 4, 4' über weitere Verbindungsstege 7 mit der Aufnahme 3 des Kühlers verbunden.

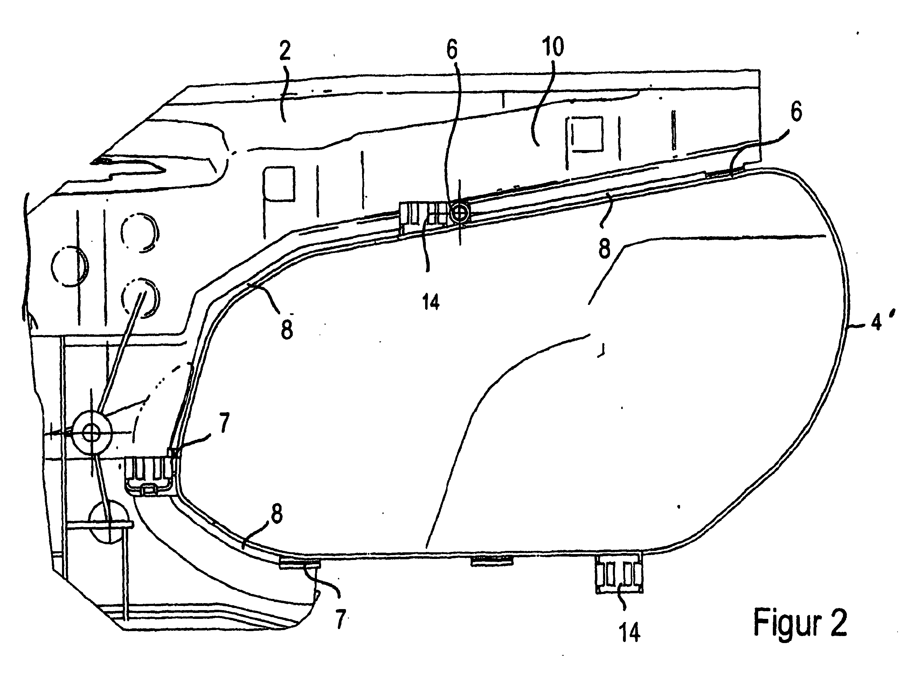

Wie besser aus Figur 2 zu ersehen ist, sind die Verbindungsstege 6, 7 derart kurz ausgebildet, dass ein zwischen denselben liegender Freischnitt 8 wesentlich länger ist als die Summer der Länge der Verbindungsstege 6, 7. Die Verbindungsstege 6 erstrecken sich im Vergleich zu den Verbindungsstegen 7 in einem in Fahrtrichtung hinteren Bereich der als Gehäuse für einen Scheinwerfer ausgebildeten Aufnahmen 4, 4'. Die Verbindungsstege 6 ragen von einer hinteren Kante des Gehäuses 4, 4' ab und sind mit einem kantenparallelen Rand 9 eines vertikal nach unten weisenden Schenkels 10 des Querträgers 2 verbunden. Die Verbindungsstege 7 erstrecken sich seitlich in einem vorderen Bereich 11 der Gehäuse 4, 4', so dass die gedachten Verbindungslinien zwischen den zwei Verbindungsstegen 6 einerseits und den anderen beiden Verbindungsstegen 7 andererseits windschief zueinander verlaufen.

Die Verbindungsstege 5, 6, 7 sind als Sollbruchlinien ausgebildet, so dass bei Erreichen einer vorgegebenen Schwellwertkraft die Stege 5, 6, 7 durchbrechen. Während der Verbindungssteg 5 durchgehend ausgebildet ist, sind die Verbindungsstege 6, 7 verteilt entlang des Randes der Aufnahmen 4, 4' angeordnet. Die Verbindungsstege 5, 6, 7 können als eine Materialverdünnung, als eine Einkerbung oder als eine Perforationslinie ausgebildet sein.

Die Verbindungsstege 6, 7 sind verteilt, vorzugsweise gleichmäßig verteilt, über eine Grenzlinie 15 zwischen dem Rand der Gehäuse 4, 4' einerseits und dem Rand des Querträgers 2 bzw. der Aufnahme 3 angeordnet. Die Verbindungsstege 6, 7 werden durch Anspritzen der aus einem thermoplastischen Kunststoffmaterial ausgebildeten Aufnahmen 3, 4, 4' an dem Querträger 2 gebildet. Dadurch, dass der Querträger 2 durch ein Metallmaterial verstärkt ausgebildet ist, weist er im Vergleich zu den Aufnahmen 3, 4, 4' eine höhere Steifigkeit auf. Vorzugsweise werden die Aufnahmen 3, 4, 4' gleichzeitig in einer Form unter Ausbildung der Freischnitte 8 hergestellt. Die Anzahl und Stärke der Verbindungsstege 6, 7 ist derart gewählt, dass sie bei Erreichen einer vorgegebenen Stoßkraft sich plastisch verformen und durchbrechen. Beispielsweise bei einer leichten Kollision werden somit die Gehäuse 4, 4' um eine durch die Verbindungsstege 6 verlaufende Drehachse in das Fahrzeuginnere verschwenkt oder nach Durchbrechen der Verbindungsstege 6 und gegebenenfalls Verbindungsstege 7 ins Fahrzeuginnere verschoben. Auf diese Weise ist der Scheinwerfer insgesamt nachgiebig in der Karosserie gelagert, wobei diese Nachgiebigkeit in Abhängigkeit von einer vorgegebenen Schwellwertkraft eintritt. Darüber hinaus wird durch diese Nachgiebigkeit in einem leichten Kollisionsfall ermöglicht, dass der Scheinwerfer weitgehend unbeschädigt bleibt. Durch das Durchbrechen der Verbindungsstege 6, 7 kann der Scheinwerfer separat repariert werden und nachträglich mittels einer nicht dargestellten weiteren Aufnahme in einer Karosserieöffnung befestigt werden. An einem vorderen Rand 13 der Gehäuse 4, 4' sind verteilt der Rastverbindungsmittel 14 angeordnet, über die ein nicht dargestellter Scheinwerfer clipsartig und lösbar mit den Aufnahmen 4, 4' verbindbar ist. Nach Montage der Scheinwerfer bilden die Aufnahmen 4, 4' ein topfförmiges äußeres Gehäuse für den Scheinwerfer, während ein nicht dargestelltes inneres Gehäuse des Scheinwerfers passgenau in dem äußeren Gehäuse 4, 4' positionier ist. Eine nicht dargestellte Abdeckscheibe des Scheinwerfers erstreckt sich entlang des vorderen Randes 13 der Gehäuse 4, 4'.

## Patentansprüche

1. Frontmodulträger für Kraftfahrzeuge mit einem sich quer zu einer Längsachse des Kraftfahrzeugs erstreckenden Querträger (2) und mit mindestens einer an dem Querträger (2) angespritzten Aufnahme (4, 4') von einem frontseitigen Bauteil, wobei die Aufnahme (4, 4') über mindestens einen Verbindungssteg (5, 6, 7) mit dem Querträger (2) verbunden ist, **dadurch gekennzeichnet, dass** die Aufnahme (4, 4') topfförmig ausgebildet ist, dass die Aufnahme (4, 4') über die verteilt entlang eines Randes der Aufnahme (4, 4') angeordneten Verbindungsstege (5, 6, 7) mit dem Querträger (2) verbunden ist und dass die Verbindungsstege (5, 6 7) als Sollbruchlinien ausgebildet sind.

2. Frontmodulträger nach Anspruch 1, **dadurch gekennzeichnet, dass** der Verbindungssteg (5, 6, 7) durch Materialverdünnung und/oder durch eine Einkerbung und/oder durch eine Perforation gebildet ist.

3. Frontmodulträger nach einem der Ansprüche 1 bis 2, **dadurch gekennzeichnet, dass** die Aufnahme (4, 4') entlang der Grenzlinie (15) zu dem Querträger (2) im Wesentlichen durch einen Freischnitt (8) getrennt ist, der sich entlang eines wesentlichen Randes der Aufnahme (4, 4') erstreckt.

4. Frontmodulträger nach einem der Ansprüche 1 bis 3, **dadurch gekennzeichnet, dass** die Länge des Freischnitts (8) wesentlich größer ist als die Länge des Verbindungsstegs (6, 7).

5. Frontmodulträger nach einem der Ansprüche 1 bis 4, **dadurch gekennzeichnet, dass** sich entlang eines Randes der Aufnahme (4, 4') eine Mehrzahl von Verbindungsstegen (6, 7) erstreckt, derart, dass die Aufnahme (4, 4') bei Erreichen einer vorgegebenen Stoßbelastung um den Querträger (2) abgebogen und/oder von dem Querträger (2) getrennt wird.

6. Frontmodulträger nach einem der Ansprüche 1 bis 5, **dadurch gekennzeichnet, dass** die Aufnahmen (3, 4, 4') durch Anspritzen mit dem Querträger (2) verbunden sind.

7. Frontmodulträger nach einem der Ansprüche 1 bis 6, **dadurch gekennzeichnet, dass** der Querträger (2) aus einem Material hergestellt ist, das im Vergleich zur Aufnahme (3, 4, 4') eine höhere Festigkeit aufweist.

8. Frontmodulträger nach einem der Ansprüche 1 bis 7, **dadurch gekennzeichnet, dass** der Querträger (2) aus einem thermoplastischen Kunststoffmaterial mit einer metallischen Einlagerung und die Aufnahme (3, 4, 4') lediglich aus einem thermoplastischen Kunststoffmaterial gefertigt sind.

## Claims

1. Modular front support for motor vehicles comprising a cross member (2) extending transversely to a longitudinal axis of the motor vehicle and at least one receiving element (4, 4') formed on said cross member (2) by injection molding to accommodate a front-end component, said receiving element (4, 4') being joined to said cross member (2) by at least one connecting web (5, 6, 7), **characterized by** the fact that the receiving element (4, 4') is pot-shaped, that the element (4, 4') is joined to the cross member (2) by means of connecting webs (5, 6, 7) which are intermittently disposed along a marginal edge of said mount (4, 4'), and that the connecting webs (5, 6, 7) are provided as predetermined breakage sections.

2. Modular front support as claimed in Claim 1, **characterized by** the fact that the connecting web (5, 6, 7) is formed with a thinned material section and/or a notch and/or a perforation.

3. Modular front support as claimed in Claims 1 and 2, **characterized by** the fact that the receiving element (4, 4') is separated from the cross member (2) by a free-cut section (8) extending along a boundary line (15) and along an essential marginal edge of said element (4, 4').

4. Modular front support as claimed in any of the preceding Claims 1 to 3, **characterized by** the fact that the length of the free-cut section (8) is essentially greater than the length of the connecting web (6, 7).

5. Modular front support as claimed in any of the preceding Claims 1 to 4, **characterized by** the fact that a plurality of connecting webs (6, 7) extend along a marginal edge of the receiving element (4, 4') such that said element (4, 4') will be bent and/or separated from the cross member (2) whenever a predetermined shock or impact load is reached.

6. Modular front support as claimed in any of the preceding Claims 1 to 5, **characterized by** the fact that the receiving elements (3, 4, 4') are joined to the cross member (2) by injection molding.

7. Modular front support as claimed in any of the preceding Claims 1 to 6, **characterized by** the fact that the cross member (2) is made of a material which has a greater strength than that of the receiving elements (3, 4, 4').

8. Modular front support as claimed in any of the preceding Claims 1 to 7, **characterized by** the fact that the cross member (2) is made of a thermoplastic material with metallic reinforcement insert and that the receiving elements (3, 4, 4') are made of thermoplastic material without such reinforcement.

## Revendications

1. Support modulaire frontal pour véhicules automobiles avec une traverse (2), qui s'étend perpendiculairement par rapport à l'axe longitudinal du véhicule automobile, et avec au moins un organe de réception (4, 4') surmoulé par injection sur la traverse (2) pour accueillir un élément frontal, ledit organe de réception (4, 4') étant relié à la traverse (2) par l'intermédiaire d'au moins une patte de liaison (5, 6, 7),
**caractérisé en ce que**
l'organe de réception (4, 4') est conçu en forme de pot, que ledit organe de réception (4, 4') est reliée à la traverse (2) par l'intermédiaire de pattes de liaison (5, 6, 7) qui sont disposées, réparties, le long d'un bord de l'organe de réception (4, 4'), et **en ce que** les patte de liaison (5, 6, 7) sont conçues en tant que ligne de rupture.

2. Support modulaire frontal selon la revendication 1,
**caractérisé en ce que**
la patte de liaison (5, 6, 7) est réalisée par amincissement du matériau et / ou par une incision et / ou par une perforation.

3. Support modulaire frontal selon revendication 1 ou 2,
**caractérisé en ce que**
l'organe de réception (4, 4') est séparé, le long de la ligne de délimitation (15) par rapport à la traverse (2), essentiellement par une découpe non guidée (8) qui s'étend le long d'un bord principal dudit organe de réception (4, 4').

4. Support modulaire frontal selon l'une des revendications 1 à 3,
**caractérisé en ce que**
la longueur de la découpe non guidée (8) est considérablement plus grande que la longueur de la patte de liaison (6, 7).

5. Support modulaire frontal selon l'une des revendications 1 à 4,
**caractérisé en ce que**,
le long d'un bord de l'organe de réception (4, 4') plusieurs pattes de liaison (6, 7) s'étendent de telle manière que ledit organe de réception (4, 4'), lorsqu'une contrainte par choc prédéterminée est atteinte, est courbé par rapport à la traverse (2) et / ou séparé de ladite traverse (2).

6. Support modulaire frontal selon l'une des revendications 1 à 5,
**caractérisé en ce que**
les organes de réception (3, 4, 4') sont reliés à la traverse (2) par surmoulage par injection.

7. Support modulaire frontal selon l'une des revendications 1 à 6,
**caractérisé en ce que**
la traverse (2) est fabriquée avec un matériau qui présente une résistance plus élevée en comparaison de l'organe de réception (3, 4, 4').

8. Support modulaire frontal selon l'une des revendications 1 à 7,
**caractérisé en ce que**
la traverse (2) est fabriquée avec une matière synthétique thermoplastique comprenant un insert métallique, et que l'organe de réception (3, 4, 4') est fabriqué seulement en matière synthétique thermoplastique.
